# EUROPEAN PATENT SPECIFICATION

(11) **EP 4 703 084 B1**
(45) Date of publication and mention of the grant of the patent: **18.11.2026**
(21) Application number: 24196753.8
(22) Date of filing: 27.08.2024
(51) Int. Cl.: B23Q 7/14, B66F 9/06

(54) **A DRIVERLESS TRANSPORTING SYSTEM FOR TRANSPORTING AN OBJECT APPLIED FOR MACHINING**
FAHRERLOSES TRANSPORTSYSTEM ZUM TRANSPORTIEREN EINES OBJEKTS ZUR BEARBEITUNG
SYSTÈME DE TRANSPORT SANS CONDUCTEUR POUR TRANSPORTER UN OBJET A USINER

(43) Date of publication of application: 04.03.2026
(73) Proprietor: System 3R International AB, 162 50 Vällingby (SE)
(72) Inventor: Blixt, Mårten, 178 34 Ekerö (SE)
(74) Representative: Arend, Christa

(56) References cited:
- FR-A1- 3 049 481
- US-A1- 2020 254 607
- US-A1- 2022 152 769
- US-A1- 2023 302 653

## Description

### FIELD OF THE INVENTION

The present invention is related to a driverless transporting system for transporting an object applied for machining. In further, the present invention is related to a manufacturing system for machining a part by a machine tool.

### BACKGROUND OF INVENTION

Since many years, automation for machining is highly relevant to increase the productivity. Various automation systems such as robot, automatic pallet changer, and automatic tool changes are widely employed in the machining processes. In the machining workshops, a plenty of objects, for example, workpieces, produced parts, machining tools must be transported between different stations and from one machine tool to another machine tool. Until now, transporting these objects is not fully automated and still requires manpower. Driverless transport vehicles are already widely applied in many production facilities and logistic centers. Now, they are also intended to be used in the machining workshops.

US 2020/0324976 discloses a robotic cart including a cart with four wheels and a robot which is autonomously moveable. The robot is featured with a docking module such that the cart can be docked on the robot. In this way, the robot can move with the cart to transport any objects loaded on the cart.

However, such system has several drawbacks if it is applied in the machining workshop. In order to combine with other automation systems applied for the machine tools, the robot must be positioned highly precisely. For example, if the cart carriers a pallet and the robot is moved to the proximity of the machine tool, in which the pallet should be loaded, the automatic pallet changer installed in the machine tool must be able to automatically catch the pallet on the cart. If the robot is not positioned accurately at the defined position, the automatic tool changer will not be able to grasp the pallet on the cart.

It is known that the positioning accuracy of such autonomously movable robot or driverless vehicle is less than the one of the automation systems of the machine tool. Thus, measures must be taken to overcome this drawback.

US 2020/0306903 discloses an arrangement for processing workpieces. The arrangement includes at least one processing machine, a machine magazine assigned to a respective processing machine for accommodating processing tools. The arrangement further includes a robot and a driverless base frame for carrying the robot. In this system, the robot is integrated on the driverless vehicle. This system compensates the positioning inaccuracy of the driverless vehicle since the robot is integrated on the vehicle itself. However, the driverless vehicle must carry additional loads, namely robot all the time, this consumes unnecessary power for driving the vehicle. Moreover, the total amount of the load which can be carried by the driverless vehicle is limited. Carrying the robot on the same vehicle causes reducing the load of object which can be transported. This leads to a reduction of efficiency.

US 2020/254607 A1 discloses a transport system according to the preamble of claim 1.

### SUMMARY OF THE INVENTION

It is an objective of this invention to provide a driverless transport system for transporting an object applied for machining which can compensate the positioning inaccuracy of an autonomous guided vehicle. Moreover, it is a further objective of this invention to provide an efficient driverless transport system for transporting an object having a high weight.

According to the present invention, these objectives are achieved through the features of independent claims. In addition, further advantageous embodiments follow from the dependent claims and the description.

The present invention is directed to a driverless transport system for transporting an object applied for machining. The transport system comprises a cart for holding the object, an autonomous guided vehicle, a lifting device arranged at the outside of the autonomous guided vehicle and a cart locking mechanism. The cart comprises supporting elements with wheels and a carry element supported by the supporting elements for holding the object. The cart is moveable on the wheels. The cart locking mechanism is movably connected to the cart and includes at least one receiving element and at least one receiving means. The autonomous guided vehicle includes at least one coupling element configured to be engaged with the receiving element for locking the cart with the autonomous guided vehicle. During transport the cart is located above the autonomous guided vehicle and driven by the autonomous vehicle to move on its wheels. The lifting device includes a column, a gripper and a driving unit configured to move the gripper in the vertical direction on the column. At least one coupling means is provided and configured to be engaged with the receiving means for locking the cart with the lifting device.

In one variant, the coupling means is fixedly mounted on the column.

In another variant, the coupling means is fixed on the gripper, in particular on the top surface of the gripper.

The machining-related object includes all the objects required for machining by a machine tool or produced by machining. They can be for example, a workpiece, a machining tool, a produced part, a measuring device. In particular, the machining-related object can also be a pallet for holding an object. During machining manufacturing many machining-related object such as workpiece, machining tool, produced part must be transported from one place to another place in the manufacturing facility, in particular from one machine tool to another machine tool. The cart can be locked in a position close to the machine tool by the lifting device such that the object can be loaded on the cart or unloaded from the cart manually or automatically. For example, if the object is a pallet, an automatic pallet changer can be utilized to load the pallet on the cart. The autonomous guided vehicle is applied to transport the cart with the object. The cart is not driven by any engine and merely pulled by the autonomous guided vehicle, but moved on its wheels such that the cart carries the load of the object, not the vehicle. Such system has the advantage of transport object having high weight, for example up to 1000 kg.

The machine tool can be a machining tool for milling, laser machining, electrical discharge machining, additive manufacturing or any other machining types.

The positioning accuracy of the autonomous guided vehicle is normally not sufficient to be used with the automation systems for machining, such as automatic pallet changers or robots for gripping the objects. For example, a robot is used to pick up the object carried by the autonomous guided vehicle. Due to the positioning inaccuracy, the autonomous guided vehicle cannot reach exactly same position each time when it brings the objects to the robot. It means there is a positioning deviation of the vehicle. Thus, it can happen that the robot cannot pick up the object because the vehicle is positioned at a slightly different position than expected. It is possible to arrange additional sensors to monitor the position of the vehicle to control the position of the vehicle very precisely. However, such solution is complex and increases the costs of the system. Additionally, if the robot has less than six degrees of freedom (DOF), it cannot reach all positions even if the vehicle is positioned precisely. In most applications, robot having 3DOF are utilized to save costs.

To solve this problem, the lifting device is arranged at the outside of the vehicle and in the proximity of the machine tool serving as an intermediate station for temporally parking the cart. The positioning accuracy of the lifting device is much higher than the one of the autonomous guided vehicles, because it is fixed at a position. Additionally, the automation system of the machine tool, such as the robot can be calibrated once according to the position of the lifting device. Since the lifting device is fixedly mounted at one position, automation system always knows exactly the position of the lifting device.

In some applications, the object has a high weight for example in the range of hundred kilogram. The transport system of the present invention has the advantage that such object with the high weight can be transported by combining the autonomous guided vehicle with the cart. Since the cart has wheels, it can be guided by the autonomous guided vehicle even the cart itself is not motorized. The cart is designed in a height that the wheels stand on the floor during the movement along with the autonomous guided vehicle. Such arrangement enables the cart to carry most of the load. In this manner, the load carried by the autonomous guided vehicle is dramatically reduced. Since the cart is pulled by the vehicle and carries the load, a small vehicle can be used for transport high load. Such system is energy efficient and minimizes the cost. The cart is a stable and rigid element, because the machining-related objects can have a weight up to 1000Kg.

The cart locking mechanism serves to engage the cart not only with the autonomous guided vehicle but also with the lifting device. The receiving elements can be engaged with the coupling elements mounted on the autonomous guided vehicle. The receiving means can be engaged with the coupling means mounted on the lifting device. The cart locking mechanism is movably connected to the cart. Thus, the cart locking mechanism can be moved independently from the cart. For example, the cart locking mechanism can be moved vertically upwardly without lifting the cart. In a preferred variant, the cart locking mechanism can be moved in the vertical direction independently from the cart. The cart locking mechanism is connected to the cart by a connecting assembly, which is configured to allow the cart locking mechanism to move vertically during locking process in which the cart is locked with autonomous guided vehicle or the lifting device, in particular without moving the cart in the vertical direction. Thus, the cart can always stay on the floor even the cart locking mechanism must be lifted by the lifting device. This provides the advantage that the lifting device must only lift and carry the weight of the cart locking mechanism not the weight of the cart and the object.

In one variant, the connecting assembly comprises a connecting element, a guiding element, and a stop element. The guiding element is configured to guide the movement of the cart locking mechanism. The connecting element serves for connecting guiding element with the cart. The stop element is applied to prevent the cart locking mechanism from falling out of guiding element.

In particular, the connecting element is fixed at one end on the cart and connected to the guiding element on the other end. The guiding element is connected to the connecting element at one end and connected to the stop element at the other end.

Especially, the connecting element is fixed at one end on the top surface of the cart and extends horizontally out of the top surface of the cart. The guiding element is connected to the connecting element orthogonally.

Particularly, the connecting element is fixed at one end on the cart and extends horizontally out of the top surface of the cart to connect to the guiding element.

Preferably, the guiding element is a cylindrical element such as a bolt. In particular, the cart locking mechanism is provided with at least one connecting hole and the bolt is inserted in the connecting hole for guiding the vertical movement of the cart locking mechanism. Such arrangement provides a simple design. In one variant, the cart locking mechanism comprises a beam and the receiving element and the receiving means are formed directly on the beam. In particular, the beam, the receiving element and the receiving means are formed in one piece.

In an advantageous variant, the receiving element and the receiving mean are through holes. Thus, the cart locking mechanism can be simply manufactured and is an element with very low cost.

In one variant, the receiving element is a through hole and the receiving means is a through hole.

In particular, there are two holes as receiving elements and two bores as receiving means. Preferably, the receiving elements are arranged in the middle part of the beam and the receiving means are arranged closely to both ends of the beam.

In another variant, the receiving element is a recess having a cone shape and the receiving means is a recess having a cone shape. The receiving element and the receiving means can have any other shapes, provides that they can engage with the coupling element and coupling means.

In an advantageous variant, two connecting assemblies are provided for connecting the cart locking mechanism to the cart. Particularly, two connecting assemblies are arranged apart from each other close to the two ends of the beam. By this way, the cart locking mechanism can be more stably connected to the cart and more reliably moved in the vertical direction.

In some embodiments, the coupling means has a conical shape with a peak and the coupling means is mounted on the column with the peak downwardly for engaging with the receiving means from the top.

In some embodiments, the coupling means is fixed on the lifting device. The coupling means are not moveable. Only the gripper is vertically moveable to move the cart locking mechanism vertically towards the coupling means or away from the coupling means.

In particular, the coupling means is arranged in a manner that gripper can be moved to a position, at which the coupling mean and the gripper are adjacent each other. For example, at a stop position at which the coupling mean is engaged with the receiving mean, the coupling mean is adjacent to the gripper.

In one variant, the gripper has two fingers and an opening, in particular forming a U-shape. The gripper is mounted on the lifting device in a manner that the opening is directed to the horizontal direction for receiving the cart locking mechanism therein. The two fingers are directed substantially in the horizontal direction. The finger at the lower position is configured to carry the beam to push the beam upwardly into the coupling means for locking the cart with the lifting device. The finger at the upper position is configured to press the beam into the coupling element for locking the cart with the autonomous guided vehicle. Thus, the gripper has a simple design and can ease the coupling.

In an advantage variant, the coupling means has a cone shape with a peak and is mounted on the lifting device with the peak downwardly for engaging with the receiving means from the top. In particular, a holding element is fixed on the column of the lifting device and extends horizontally. The coupling mean is mounted on the holding element with the peak downwardly. This arrangement makes the engagement with the receiving means easier and more reliable.

The lifting device includes a column provided with a guide rail, the gripper is movably mounted on the guide rail of the column, and a driving unit configured to move the gripper on the guide rail. The driving unit of lifting device is a pneumatic driving unit, an electrical drive unit or hydraulic driving unit.

When the cart having the object thereon must be docked to the lifting device, the autonomous guided vehicle is driven to a docking position, which is defined at a position in the proximity of the lifting device. The lifting device is configured that the gripper is moved from a start position upwardly such that the cart locking mechanism enters into the gripper when the vehicle is positioned at the docking position. When the cart locking mechanism is carried by the gripper, the gripper with the cart locking mechanism is further moved upwardly until a defined stop position. During the vertical movement, the coupling element is disengaged with the receiving element and the coupling means is engaged with the receiving means. Since the coupling means is positioned with the peak downwardly, the coupling means can enter into the through hole as the receiving means from the top.

When the cart locking mechanism must be undocked from the lifting device and coupled to the vehicle, the vehicle is positioned at the docking position, the gripper with the cart locking mechanism is located above the vehicle. The gripper is moved downwardly. During the downward movement, the coupling means is disengaged with the receiving means and coupling element is engaged with the receiving element.

In particular, the cart locking mechanism is always at least partially engaged with the coupling means and/ or coupling elements to ensure that the cart cannot move away.

In some embodiments, the coupling element and the coupling means has a top portion having a conical shape. This allows the coupling element can be easily coupled to the receiving element and the coupling means can be easily coupled to the receiving means.

The autonomous guided vehicle can be any moving means which can move in a driverless way. The coupling elements have a simple design. Thus, it allows to apply any autonomous guided vehicles for the transport system of the present invention.

In particular, the angle of the conical shaped top portion is in the range of 10 to 40 degree. This angle eases the decoupling of the coupling elements and the receiving element and the coupling means and the receiving means, respectively. The top portion can also have other shapes, such as pyramid, cylinder, and cube.

In a preferred variant, the coupling element has a supporting portion and a cone arranged on the top of the supporting portion. The supporting portion has a cylindrical shape, but it is also possible to design the supporting element having other shapes, such as cube or triangular prism.

In a preferred variant, the coupling element has a supporting portion, a guiding portion arranged on the top of the supporting portion and a cone arranged on the top of the guiding portion. The guiding portion arranged between the supporting element and the cone serves for easily guiding the cone into the receiving element. In particular, the guiding portion has a short length to reduce the risk that the coupling element is stuck in the receiving element. Preferably, the guiding portion has a cylindrical shape. However, it can also have other shapes, such as cube or triangular prism.

In one variant, the supporting portion, the guiding portion and the cone are made in one piece. In another variant, the guiding portion and cone are made in one piece and connected with the supporting portion. It is possible to make all three portions in the same material, for example, steel or aluminum. Preferably, the cone and the guiding portion is made in one material, for example steel to improve the strength and reduce wear and the supporting element made in another material, for example aluminum to keep the weight low.

In an advantageous variant, the supporting portion is designed in a manner that the cart locking mechanism sits on the supporting portion when the coupling element is engaged with the receiving element. This provides a simple construction. The coupling element serves not only as an engaging element but also as a supporting element to hold the cart locking mechanism.

In some embodiments, the coupling elements are arranged directly on the top surface of the autonomous guided vehicle. In order to reduce the weight to be carried by the vehicle, only the coupling elements are mounted on the vehicle. No other elements are required. Arranging the lifting device with the gripper at the outside of the vehicle makes this possible.

The coupling means has a pin with a conical shape. In a preferred variant, the coupling means has a guiding section, on which the pin is fixed. The guiding section stably sits on the holding element. It is possible to provide a supporting section arranged below the guiding section. In this variant, the supporting section sits on the holding element of the lifting device.

In one variant, the pin and the guiding section are made in one piece. In other variant, the guiding section and pin are made in two pieces and connected together. Different materials can be used, for example, steel or aluminum. Preferably, the pin and the guiding section are made in steel to improve the strength and reduce wear.

In a preferred variant, the system comprises two lifting devices positioned apart from each other. Each lifting device comprises one gripper and one coupling means. The cart locking mechanism comprise two receiving means for being engaged with the coupling means of the lifting devices.

In a preferred variant, two coupling elements are provided on the autonomous guided vehicle. This provides the advantage that the tilting of the cart locking mechanism can be avoided and the cart locking mechanism can be stably held by the coupling elements.

In one variant, for lifting device a control module is provided and configured to control the lifting device. Moreover, a central control unit is provided and configured to control the autonomous guided vehicle. The central control unit and the control module are configured to be able to communicate with each other.

Preferably, the central control unit is configured to control multiple autonomous guided vehicles. The central control unit controls the autonomous guided vehicle to move to different lifting devices. When it reaches the position closely to the lifting device, the central control unit sends a signal to the control module of the corresponding lifting device such that the control module controls the lifting device to move the gripper.

Alternatively, the central control unit is configured not only to control the autonomous guided vehicles but also to control the lifting devices.

The present invention is directed to a manufacturing system comprising a plurality of machine tools, an automation device and the system for transporting the cart. The lifting device and the automation device are fixedly arranged in the proximity of the machine tool. The automation device is configured to loads the object on the cart or unload the object from the cart when the cart is locked with the lifting device. The autonomous guided vehicle is applied to transport the workpiece, produced part, machining tools between the machine tools. The cart is first docked to the lifting device and the object carried by the cart can be loaded into the machine tool.

The present invention is related to a method for applying the transport system. The method comprises the steps of: controlling the autonomous guided vehicle carrying the cart with the object applied for machining to move to the lifting device; moving the gripper to a defined vertical position such that the cart locking mechanism is automatically held by the gripper by controlling the autonomous guided vehicle to drive to a docking position; driving the autonomous guided vehicle to the docking position; and moving the gripper carrying the cart locking mechanism upwardly until the coupling means are engaged with the receiving means for locking the cart locking mechanism to the lifting device, in particular the cart is not moved vertically with the cart locking mechanism.

In one variant, the method further comprises the following steps: driving the autonomous guided vehicle to the docking position; and moving the gripper carrying the cart locking mechanism downwardly until the coupling elements are engaged with the receiving elements for locking the cart locking mechanism to the autonomous guided vehicle.

### BRIEF DESCRIPTION OF THE DRAWINGS

In the following, a more particular description of the present invention is further described. The embodiments are described and explained with details with reference to accompanying drawings in which:
- Fig.1: illustrates a three-dimensional view of a system of the present invention;
- Fig.2: illustrates a three-dimensional view of an autonomous guided vehicle;
- Fig.3: illustrates a three-dimensional view of the lifting device;
- Fig.4: illustrates detailed view of a gripper and a coupling mean of the lifting device;
- Fig.5: illustrates a three-dimensional view of a cart;
- Fig.6: illustrates a coupling element;
- Fig.7: illustrates a sectional view of engaging the coupling element with a receiving element;
- Fig.8, 9 and 10: illustrates the engagement of the receiving element and receiving means;
- Fig.11: illustrates a three-dimensional view of autonomous guided vehicle positioned close to the lifting devices;
- Fig. 12: illustrates the state of docking the cart to lifting devices;
- Fig. 13: illustrates a detailed view of the decoupling of the coupling element from the receiving element;
- Fig. 14: illustrates the side view of the system;
- Fig. 15: illustrates the cart docked to the lifting devices with the object thereon; and
- Fig. 16: illustrates the coupling of the coupling element and the receiving element.

### EXEMPLARY EMBODIMENTS

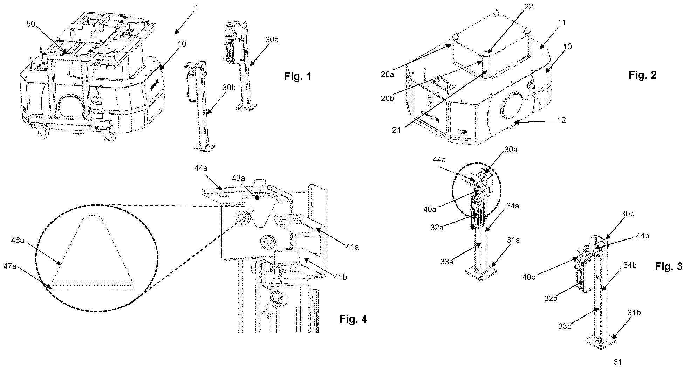

The figure 1 shows a three-dimensional view of a transport system 1 which comprises an autonomous guided vehicle 10, two lifting devices 30a, 30b and a cart 50. The system is aimed to transport an object which is carried by the cart. The autonomous guided vehicle is driven by a motor and can be controlled to move. The cart is not driven by any engine but is moveable. When the cart is coupled to the autonomous guided vehicle, the cart is pulled by the autonomous guided vehicle. The lifting devices are fixed at a defined position, in particular in the proximity of a machine tool. In the application, the autonomous guided vehicle is controlled to move toward the lifting devices and the cart is docked to the lifting devices. A robot arm arranged externally can unload the object from the cart or load the object on the cart.

Figure 2 shows a three-dimensional view of the autonomous guided vehicle 20 with vehicle wheels 12. On the top surface 11 of the autonomous guided vehicle four coupling elements 20a, 20b, 20c and 20d are fixed. The number of the coupling elements and the position of the coupling elements are not limited as shown in the figures. It is possible to arrange more or less coupling elements than four as shown in the figures. In a preferred variant, two coupling elements are fixed on the top surface of the vehicle. In figure 2, the coupling elements are positioned in a regular manner, but it is also possible to mount the coupling elements at other positions and in an irregular manner. In further, figure 2 shows four identical coupling elements. However, it is not excluded to apply coupling elements with different shapes or dimensions. The coupling element shown in figure 2 has a supporting portion 21 and a cone 22. The supporting portion and the cone are formed in one part. However, the cone can also be a separate part and connected to the supporting portion.

Figure 3 shows the embodiment in which two lifting devices 30a, 30b are provided. These two lifting devices are spaced apart from each other with a defined distance. The first lifting device 30a has a first base 31a and a first column 34a fixedly mounted on the first base. The first column is provided with a first guide rail 33a arranged in the vertical direction. A first gripper 40a is moveably mounted on the first guide rail. A first driving unit 32a is arranged on the first column to drive the first gripper to move along the guide rail in the vertical direction. The first gripper has a U-shape with an opening on the horizontal direction. A first coupling means 43a is fixedly mounted on the column, in particular on a first holding element 44a which extends horizontally from the column. In particular, the first coupling element has a cone shape, and the coupling element is arranged on the holding element of the column such that the peak of the cone points downwardly. As shown in the enlarged view of the first coupling means shown in the figure 4, it has a conical pin 46a and a guiding section 47a for engaging with a bore formed on the cart locking mechanism.

Figure 4 shows also the gripper which has a first finger 41a and a second finger 41b. Both fingers are directed substantially in the horizontal direction for receiving the cart locking mechanism therebetween. The first finger is at an upper position and the second finger is at a lower position.

The second lifting device member 30b has a second base 31b and a second column 34b fixedly mounted on the second base. The second column is provided with a second guide rail 33b arranged in the vertical direction. A second gripper 40b is moveably mounted on the guide rail. A second driving unit 32b is arranged on the second column to drive the second gripper to move along the guide rail in the vertical direction. The second gripper has a U-shape with the opening on the horizontal direction. A second coupling means 43b is fixedly mounted on the column. In particular, the second coupling element has a cone shape, and the coupling element is arranged on a fixing element of the column such that the tip of the cone points downwardly. The lifting device can be mounted in the proximity of a machine tool by screwing the base on the floor.

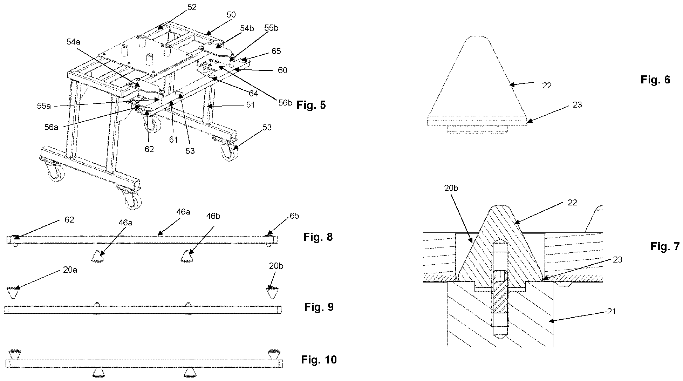

Figure 5 illustrates a three-dimensional view of the cart. This cart comprises four supporting elements 51 and cartwheels 53. A carry element 52 is mounted on the top of the supporting elements to carry the object. The carry element shown in the figure 5 is in the form of a frame, but it is not limited to this form. A plate or any form suitable to carry the object is possible.

The cart locking mechanism 60 comprises a beam 61, a first bore 62, a first hole 63, a second hole 64 and a second bore 65. The beam is moveably connected to the carry element, in particular on the front side of the carry element. It is also possible to connect the beam on the supporting elements, especially on the two supporting elements at the front side. The front side is the side which faces the lifting device when the autonomous guided vehicle with the cart thereon is docked in the proximity of the lifting device for loading or unloading the object. In this embodiment, the cart locking mechanism is connected to the carry element by a connecting element, a bolt and a stop element. However, other construction for fixing the cart locking mechanism is also possible if the cart locking mechanism can be moved independently from the cart, in particular vertically. A first connecting element 54a and a second connecting element 54b are fixed on the top surface of the carry element. They are positioned apart from each other. The first connecting element and the second connecting element extend out of the carry element toward the front side. A first bolt 55a and a second bolt 55b are provided to mount the cart locking mechanism on the first connecting element and the second connecting element. In further, the beam is vertically moveable along the first bolt and the second bolt. Two connecting holes are provided on the locking beam for inserting the first bolt and the second bolt therethrough. This arrangement allows the cart locking mechanism being accessible from the top and the bottom for engaging with the coupling elements of the autonomous guided vehicle and the coupling means of the lifting device.

As shown in figures 5, 8, 9, and 10 the beam has an elongated body. The longitudinal direction of the beam is in parallel to the front surface of the carry element. The beam has a defined height. The first bore 62, the second bore 65, the first hole 63 and the second hole are formed on the beam in the vertical direction. In the embodiment shown in the figures the first hole and the second hole bored in the middle of the beam serve for engaging with the coupling elements provided on the autonomous guided vehicle and the first bore and the second bore arranged close to the two ends of the beam serve for engaging with the coupling means of the lifting device. The number of the holes and the bores are not limited to four shown in the figures. It is possible to provide less or more holes or bores for the coupling.

Figure 8 shows the state that the coupling means of the lifting device is engaged with the first bore and the second bore from the top side of the beam while the coupling element of the autonomous guided vehicle is disengaged with the first hole and the second hole.

Figure 9 shows the state that the coupling element of the autonomous guided vehicle is engaged with the first hole and the second hole from the bottom side of the beam while the coupling means of the lifting device is disengaged with the first hole and the second hole.

Figure 10 shows the state that the coupling means of the lifting device is engaged with the first hole and the fourth hole from the top side of the beam while the coupling element of the autonomous guided vehicle is engaged with the second hole and the third hole from the bottom side of the beam. At least one coupling element or coupling means is partially engaged with the beam so that the cart cannot move away.

The coupling element includes a guiding portion 23 and a cone 22 on the top of the guiding portion. Figure 6 shows a side view of the cone 22 and the guiding portion 23 of the coupling element. The cone has a conical shape, and the guiding portion has a cylindrical shape.

Figure 7 shows a detailed view of the engaged cone 22 and the hole. The guiding portion 23 and the cone 22 are fully entered into the hole. The supporting portion 21 has a larger diameter than the inner diameter of the hole such that the carrier can sit on the supporting portion. As shown in the figure 7, the inner diameter of the hole is slightly larger than the diameter of the guiding portion for ensuring the engaging despite of the tolerance of the cone and guiding portion. The height of the guiding portion is much smaller than the depth of the hole to reduce the distance of the guiding path.

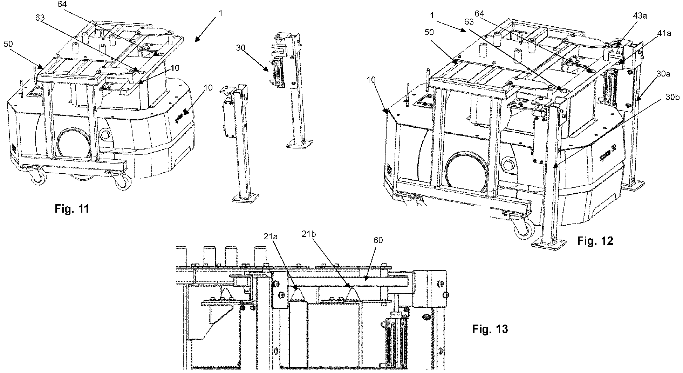

Figures 11 to 16 illustrate one example of loading the object on the cart.

Figure 11 shows a three-dimensional view of the system. Particularly, it shows the state when the autonomous guided vehicle together with the cart approaches the lifting device. In this figure, no object is carried by the cart. At this state, the coupling elements of the autonomous guided vehicle are inserted in the first hole 63 and the second hole 64 of the beam. The interaction of the coupling element and hole allows the cart to move along with the autonomous guided vehicle.

In order to dock the cart to the lifting device, the first gripper and the second gripper are moved by the first driving unit and the second driving unit to a defined vertical position such that the beam can enter into the opening of the grippers. Figure 12 illustrates the state that the autonomous guided vehicle is stopped at a docking position, at which the beam is received in the grippers. At this state, the coupling elements of the autonomous guided vehicle are still inserted in the first hole and the second hole. The beam is positioned between the grippers but is not docked to the lifting device.

The next step is to decouple the beam from the autonomous guided vehicle and couple the beam with the lifting device. Thus, the grippers of the lifting device are further moved upwardly by the driving units. During the upward movement of grippers, the coupling elements of the autonomous guided vehicles exit out of the first hole and the second hole, and the coupling means of the lifting device enter into the first bore and the second bore. This is also a transition between the referencing systems of the autonomous guided vehicle and the lifting device. The conical shape of the coupling elements and the coupling means make this transition easier. The positioning error of the autonomous can be compensated.

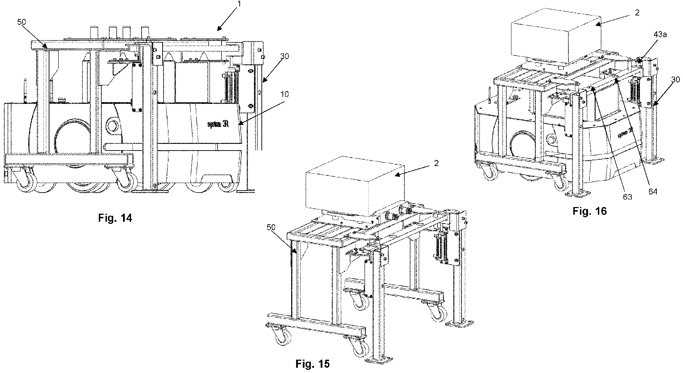

Figure 13 shows partially the system in the state that the autonomous guided vehicle is decoupled from the beam and the beam is coupled with the lifting device. It can be seen that the coupling elements 21a, 21b of the autonomous guided vehicle are positioned below the beam 60 and fully out of the holes. Figure 14 shows the three-dimensional view of the system at this state. As shown in the figure 14, the second finger of the gripper presses on the beam from the bottom such that the coupling means on the lifting device can easily enter into the receiving means of the beam.

After the cart is decoupled from the autonomous guided vehicle, the vehicle can move away for other applications to avoid the idle time of the vehicle. The object can be loaded on the cart by an automation device which is not shown in the figures. For example, the system is utilized in a manufacturing site for transporting the workpieces to be machined or the machined part between machine tools and other machining stations. The lifting device is positioned in the proximity of the machine tool. The object is a workpiece, a machined part or a pallet carrying a workpiece or a part. The pallet having the machined part can be automatically removed from the machine table and loaded on the cart as shown in the figure 15. Since only the beam is raised by the gripper, the weight of the object must not be carried by the gripper.

The autonomous guided vehicle is controlled to move to the lifting device again for moving the cart to the docking position. The vehicle is first to move to the docking position close to the lifting device and under the cart. The grippers of the lifting device are driven downwardly such that the coupling means of the lifting device are decoupled from the first bore and the second bore and the coupling elements of the autonomous guided vehicle are coupled again with the first hole and the second hole. As shown in the figure 16, the first finger of the gripper presses on the beam from the top such that the coupling elements on the vehicle can easily enter into the receiving elements of the beam.

### LIST OF REFERENCES

- 1: transporting system
- 2: object
- 10: autonomous guided vehicle
- 11: top surface of the autonomous guided vehicle
- 12: vehicle wheel
- 20a: first coupling element
- 20b: second coupling element
- 21: supporting portion of the coupling element
- 22: cone
- 23: guiding portion of the coupling element
- 30: lifting device
- 30a: first lifting device member
- 30b: second lifting device member
- 31a: first base
- 31b: second base
- 32a: first driving unit
- 32b: second driving unit
- 33a: first guide rail
- 33b: second guide rail
- 34a: first column
- 34b: second column
- 40a: first gripper
- 40b: second gripper
- 41a: first finger
- 41b: second finger
- 43a: first coupling means
- 43b: second coupling means
- 44a: first holding element
- 44b: second holding element
- 46a: first pin
- 47a: first guiding section
- 50: cart
- 51: supporting element of the cart
- 52: carry element
- 53: cart wheel
- 54a: first connecting element
- 54b: second connecting element
- 55a: first bolt
- 55b: second bolt
- 56a: first stop element
- 56b: second stop element
- 60: cart locking mechanism
- 61: beam
- 62: first bore
- 63: first hole
- 64: second hole
- 65: second bore

## Claims

1. A driverless transport system (1) for transporting an object applied for machining, in particular for machining a part by a machine tool (2) comprising:
a. a cart (50) for holding the object having supporting elements with wheels and a carry element supported by the supporting elements for holding the object;
b. a cart locking mechanism movably connected to the cart including at least one receiving element (63, 64) and at least one receiving means (62, 65);
c. an autonomous guided vehicle (10) including at least one coupling element (20a, 20b) configured to be engaged with the receiving element for locking the cart with the autonomous guided vehicle, wherein during transport the cart is located above the autonomous guided vehicle and driven by the autonomous vehicle to move on its wheels; and **characterized by**
d. a lifting device (30) arranged at the outside of the autonomous guided vehicle, wherein the lifting device includes a column, a gripper (40) and a driving unit configured to move the gripper in the vertical direction on the column, wherein at least one coupling means (43a, 43b) is provided and configured to be engaged with the receiving means for locking the cart with the lifting device.

2. The transport system according to claim 1, wherein the coupling means is arranged at the top portion of the column and the gripper can be moved to a position, at which the coupling mean and the gripper are adjacent each other.

3. The transporting system according to claim 1 or 2, wherein the coupling means has a conical shape with a peak and the coupling means is mounted on the column with the peak downwardly for engaging with the receiving means from the top.

4. The transport system according to one of claims 1 to 3, wherein the gripper has two fingers and an opening, in particular forming a U-shape, wherein the gripper is mounted on the lifting device in a manner that the opening is directed to the horizontal direction for receiving the cart locking mechanism therein.

5. The transport system according to one of claims 1 to 4, wherein the cart locking mechanism is connected to the cart by a connecting assembly (54a, 55a), which is configured to allow the cart locking mechanism to move vertically during locking process in which the cart is locked with the autonomous guided vehicle or the lifting device.

6. The transporting system according to claim 5, wherein the connecting assembly comprises a connecting element (54a, 54b), a guiding element (55a, 55b) and a stop element (56a, 56b), in particular the connecting element is fixed at one end on the cart and connected to the guiding element on the other end, wherein the guiding element is connected to the connecting element at one end and connected to the stop element at the other end.

7. The transporting system according to one of claims 1 to 6, wherein the cart locking mechanism comprises a beam and the receiving element and the receiving means are formed directly on the beam, in particular the beam, the receiving element and the receiving means are formed in one piece.

8. The transporting system according to one of claims 1 to 7, wherein the receiving element and receiving means are through holes.

9. The transport system according to one of claims 1 to 8, wherein the coupling element has a top portion having a conical shape and the coupling mean has a top portion having a conical shape, in particular the angle of the conical shaped top portion is in the range of 10 to 40 degree.

10. The transport system according to claim 9, wherein the coupling element has a supporting portion, a guiding portion arranged on the top of the supporting portion and a cone arranged on the top of the guiding portion.

11. The transport system according to one of claims 1 to 10, wherein the coupling means has a guiding section (47a) and a pin (46a) having a conical shape formed on the guiding section.

12. The transport system according to one of claims 1 to 11, wherein the system comprises two lifting devices positioned apart from each other, wherein each lifting device comprises one gripper and one coupling means and the cart locking mechanism comprises two receiving means for being engaged with the coupling means of the lifting devices.

13. A manufacturing system comprising a plurality of machine tools, the transporting system according to one of the claims 1 to 12 and an automation device for transferring the machining-related object from the lifting device to the machine tool, wherein the lifting device and the automation device are fixedly arranged in the proximity of the machine tool, wherein the automation device is configured to load the object on the cart or unload the object from the cart when the cart is locked with the lifting device.

14. A method for applying the system according to one of claims 1 to 12 comprising the following steps:
a. controlling the autonomous guided vehicle (10) carrying the cart (50) with the object to move to the lifting device (30);
b. moving the gripper (40) to a defined vertical position such that the cart locking mechanism is automatically held by the gripper by controlling the autonomous guided vehicle to drive to a docking position;
c. driving the autonomous guided vehicle to the docking position; and
d. moving the gripper carrying the cart locking mechanism upwardly until the coupling means (43a, 43b) are engaged with the receiving means (62, 65) for locking the cart locking mechanism to the lifting device, in particular the cart is not moved vertically with the cart locking mechanism.

15. The method according to claim 14, wherein the method further comprises the following steps:
a. driving the autonomous guided vehicle (10) to the docking position; and
b. moving the gripper (40) carrying the cart locking mechanism downwardly until the coupling elements (20a, 20b) are engaged with the receiving elements (63, 64) for locking the cart locking mechanism to the autonomous guided vehicle.

## Patentansprüche

1. Fahrerloses Transportsystem (1) zum Transportieren eines zur Bearbeitung angewendeten Objekts, insbesondere zur Bearbeitung eines Teils durch eine Werkzeugmaschine (2), umfassend:
a. einen Wagen (50) zum Aufnehmen des Objekts, der Stützelemente mit Rädern und ein Tragelement, das von den Stützelementen getragen wird, zum Aufnehmen des Objekts aufweist;
b. einen Wagenverriegelungsmechanismus, der beweglich mit dem Wagen verbunden ist und mindestens ein Aufnahmeelement (63, 64) und mindestens ein Aufnahmemittel (62, 65) umfasst;
c. ein autonomes geführtes Fahrzeug (10), das mindestens ein Kopplungselement (20a, 20b) beinhaltet, das dazu ausgelegt ist, mit dem Aufnahmeelement in Eingriff gebracht zu werden, um den Wagen mit dem autonomen geführten Fahrzeug zu verriegeln, wobei sich der Wagen während des Transports über dem autonomen geführten Fahrzeug befindet und durch das autonome Fahrzeug angetrieben wird, um sich auf seinen Rädern zu bewegen; und **gekennzeichnet durch**
d. eine Hebevorrichtung (30), die an der Außenseite des autonomen geführten Fahrzeugs angeordnet ist, wobei die Hebevorrichtung eine Säule, einen Greifer (40) und eine Antriebseinheit umfasst, die dazu ausgelegt ist, den Greifer in vertikaler Richtung an der Säule zu bewegen, wobei mindestens ein Kopplungsmittel (43a, 43b) vorgesehen und dazu ausgelegt ist, mit dem Aufnahmemittel in Eingriff gebracht zu werden, um den Wagen mit der Hebevorrichtung zu verriegeln.

2. Transportsystem nach Anspruch 1, wobei das Kopplungsmittel am oberen Abschnitt der Säule angeordnet ist und der Greifer in eine Position bewegt werden kann, in der das Kopplungsmittel und der Greifer benachbart zueinander sind.

3. Transportsystem nach Anspruch 1 oder 2, wobei das Kopplungsmittel eine konische Form mit einer Spitze aufweist und das Kopplungsmittel an der Säule mit der Spitze nach unten montiert ist, um von oben in das Aufnahmemittel einzugreifen.

4. Transportsystem nach einem der Ansprüche 1 bis 3, wobei der Greifer zwei Finger und eine Öffnung aufweist, die insbesondere eine U-Form bildet, wobei der Greifer derart an der Hebevorrichtung montiert ist, dass die Öffnung in horizontaler Richtung ausgerichtet ist, um den Wagenverriegelungsmechanismus darin aufzunehmen.

5. Transportsystem nach einem der Ansprüche 1 bis 4, wobei der Wagenverriegelungsmechanismus mit dem Wagen durch eine Verbindungsbaugruppe (54a, 55a) verbunden ist, die dazu ausgelegt ist, dem Wagenverriegelungsmechanismus zu ermöglichen, sich während eines Verriegelungsprozesses, bei dem der Wagen mit dem autonomen geführten Fahrzeug oder der Hebevorrichtung verriegelt wird, vertikal zu bewegen.

6. Transportsystem nach Anspruch 5, wobei die Verbindungsbaugruppe ein Verbindungselement (54a, 54b), ein Führungselement (55a, 55b) und ein Anschlagelement (56a, 56b) umfasst, wobei insbesondere das Verbindungselement an einem Ende am Wagen befestigt und an dem anderen Ende mit dem Führungselement verbunden ist, wobei das Führungselement an einem Ende mit dem Verbindungselement verbunden ist und an dem anderen Ende mit dem Anschlagelement verbunden ist.

7. Transportsystem nach einem der Ansprüche 1 bis 6, wobei der Wagenverriegelungsmechanismus einen Balken umfasst und das Aufnahmeelement und das Aufnahmemittel direkt am Balken ausgebildet sind, wobei insbesondere der Balken, das Aufnahmeelement und das Aufnahmemittel einstückig ausgebildet sind.

8. Transportsystem nach einem der Ansprüche 1 bis 7, wobei das Aufnahmeelement und das Aufnahmemittel Durchgangslöcher sind.

9. Transportsystem nach einem der Ansprüche 1 bis 8, wobei das Kopplungselement einen oberen Abschnitt mit konischer Form aufweist und das Kopplungsmittel einen oberen Abschnitt mit konischer Form aufweist, wobei insbesondere der Winkel des konischen geformten oberen Abschnitts im Bereich von 10 bis 40 Grad liegt.

10. Transportsystem nach Anspruch 9, wobei das Kopplungselement einen Stützabschnitt, einen Führungsabschnitt, der auf der Oberseite des Stützabschnitts angeordnet ist, und einen Kegel aufweist, der auf der Oberseite des Führungsabschnitts angeordnet ist.

11. Transportsystem nach einem der Ansprüche 1 bis 10, wobei das Kopplungsmittel einen Führungsabschnitt (47a) und einen an dem Führungsabschnitt ausgebildeten Zapfen (46a) mit konischer Form aufweist.

12. Transportsystem nach einem der Ansprüche 1 bis 11, wobei das System zwei voneinander beabstandete Hebevorrichtungen umfasst, wobei jede Hebevorrichtung einen Greifer und ein Kopplungsmittel umfasst und der Wagenverriegelungsmechanismus zwei Aufnahmemittel umfasst, um mit den Kopplungsmittel der Hebevorrichtungen in Eingriff gebracht zu werden.

13. Fertigungssystem, umfassend eine Mehrzahl von Werkzeugmaschinen, das Transportsystem nach einem der Ansprüche 1 bis 12 und eine Automatisierungsvorrichtung zum Überführen des bearbeitungsbezogenen Objekts von der Hebevorrichtung zur Werkzeugmaschine, wobei die Hebevorrichtung und die Automatisierungsvorrichtung ortsfest in der Nähe der Werkzeugmaschine angeordnet sind, wobei die Automatisierungsvorrichtung dazu ausgelegt ist, das Objekt auf den Wagen zu laden oder das Objekt aus dem Wagen zu entladen, wenn der Wagen mit der Hebevorrichtung verriegelt ist.

14. Verfahren zur Anwendung des Systems nach einem der Ansprüche 1 bis 12, umfassend die folgenden Schritte:
a. Steuern des autonomen geführten Fahrzeugs (10), das den Wagen (50) mit dem Objekt trägt, so, dass es sich zur Hebevorrichtung (30) bewegt;
b. Bewegen des Greifers (40) in eine definierte vertikale Position, so dass der Wagenverriegelungsmechanismus automatisch vom Greifer gehalten wird, indem das autonome geführte Fahrzeug so gesteuert wird, dass es in eine Andockposition fährt;
c. Fahren des autonomen geführten Fahrzeugs in die Andockposition; und
d. Bewegen des Greifers, der den Wagenverriegelungsmechanismus trägt, nach oben, bis die Kopplungsmittel (43a, 43b) mit den Aufnahmemitteln (62, 65) in Eingriff stehen, um den Wagenverriegelungsmechanismus mit der Hebevorrichtung zu verriegeln, wobei insbesondere der Wagen nicht vertikal mit dem Wagenverriegelungsmechanismus bewegt wird.

15. Verfahren nach Anspruch 14, wobei das Verfahren ferner die folgenden Schritte umfasst:
a. Fahren des autonomen geführten Fahrzeugs (10) in die Andockposition; und
b. Bewegen des Greifers (40), der den Wagenverriegelungsmechanismus trägt, nach unten, bis die Kopplungselemente (20a, 20b) mit den Aufnahmeelementen (63, 64) in Eingriff stehen, um den Wagenverriegelungsmechanismus mit dem autonomen geführten Fahrzeug zu verriegeln.

## Revendications

1. Système de transport sans conducteur (1) pour transporter un objet appliqué pour l'usinage, en particulier pour l'usinage d'une pièce par une machine-outil (2) comprenant :
a. un chariot (50) pour retenir l'objet ayant des éléments de support avec des roues et un élément porteur supporté par les éléments de support pour retenir l'objet ;
b. un mécanisme de verrouillage de chariot raccordé de façon déplaçable au chariot incluant au moins un élément de réception (63, 64) et au moins un moyen de réception (62, 65) ;
c. un véhicule guidé autonome (10) incluant au moins un élément de couplage (20a, 20b) configuré pour être en prise avec l'élément de réception pour verrouiller le chariot sur le véhicule guidé autonome, dans lequel, durant le transport, le chariot est situé au-dessus du véhicule guidé autonome et entraîné par le véhicule autonome pour le déplacer sur ses roues ; et **caractérisé par**
d. un dispositif de levage (30) agencé à l'extérieur du véhicule guidé autonome, dans lequel le dispositif de levage inclut une colonne, un organe de saisie (40), et une unité d'entraînement configurée pour déplacer l'organe de saisie dans la direction verticale sur la colonne, dans lequel au moins un moyen de couplage (43a, 43b) est prévu et configuré pour être en prise avec le moyen de réception pour verrouiller le chariot sur le dispositif de levage.

2. Système de transport selon la revendication 1, dans lequel le moyen de couplage est agencé au niveau de la partie supérieure de la colonne et l'organe de saisie peut être déplacé jusqu'à une position, au niveau de laquelle le moyen de couplage et l'organe de saisie sont adjacents l'un à l'autre.

3. Système de transport selon la revendication 1 ou 2, dans lequel le moyen de couplage a une configuration conique avec une pointe et le moyen de couplage est monté sur la colonne avec la pointe vers le bas pour entrer en prise avec le moyen de réception à partir du dessus.

4. Système de transport selon l'une des revendications 1 à 3, dans lequel l'organe de saisie a deux doigts et une ouverture, en particulier formant une configuration de U, dans lequel l'organe de saisie est monté sur le dispositif de levage d'une manière telle que l'ouverture est dirigée vers la direction horizontale pour recevoir le mécanisme de verrouillage de chariot dans celle-ci.

5. Système de transport selon l'une des revendications 1 à 4, dans lequel le mécanisme de verrouillage de chariot est raccordé au chariot par un ensemble de raccordement (54a, 55a), qui est configuré pour permettre au mécanisme de verrouillage de chariot de se déplacer verticalement durant un processus de verrouillage dans lequel le chariot est verrouillé sur le véhicule guidé autonome ou le dispositif de levage.

6. Système de transport selon la revendication 5, dans lequel l'ensemble de raccordement comprend un élément de raccordement (54a, 54b), un élément de guidage (55a, 55b), et un élément d'arrêt (56a, 56b), en particulier l'élément de raccordement est fixé au niveau d'une extrémité sur le chariot et raccordé à l'élément de guidage sur l'autre extrémité, dans lequel l'élément de guidage est raccordé à l'élément de raccordement au niveau d'une extrémité et raccordé à l'élément d'arrêt au niveau de l'autre extrémité.

7. Système de transport selon l'une des revendications 1 à 6, dans lequel le mécanisme de verrouillage de chariot comprend une barre et l'élément de réception et le moyen de réception sont formés directement sur la barre, en particulier la barre, l'élément de réception, et le moyen de réception sont formés de façon monopièce.

8. Système de transport selon l'une des revendications 1 à 7, dans lequel l'élément de réception et le moyen de réception sont des trous traversants.

9. Système de transport selon l'une des revendications 1 à 8, dans lequel l'élément de couplage a une partie supérieure ayant une forme conique et le moyen de couplage a une partie supérieure ayant une forme conique, en particulier l'angle de la partie supérieure de forme conique est dans la plage de 10 à 40 degrés.

10. Système de transport selon la revendication 9, dans lequel l'élément de couplage a une partie de support, une partie de guidage agencée sur le dessus de la partie de support et un cône agencé sur le dessus de la partie de guidage.

11. Système de transport selon l'une des revendications 1 à 10, dans lequel le moyen de couplage a une section de guidage (47a) et une broche (46a) ayant une configuration conique formée sur la section de guidage.

12. Système de transport selon l'une des revendications 1 à 11, dans lequel le système comprend deux dispositifs de levage positionnés de façon séparée l'un de l'autre, dans lequel chaque dispositif de levage comprend un organe de saisie et un moyen de couplage et le mécanisme de verrouillage de chariot comprend deux moyens de réception destinés à être en prise avec le moyen de couplage des dispositifs de levage.

13. Système de fabrication comprenant une pluralité de machines-outils, le système de transport selon l'une des revendications 1 à 12 et un dispositif d'automatisation pour transférer l'objet connexe à usinage depuis le dispositif de levage jusqu'à la machine-outil, dans lequel le dispositif de levage et le dispositif d'automatisation sont agencés de façon fixe à proximité de la machine-outil, dans lequel le dispositif d'automatisation est configuré pour charger l'objet sur le chariot ou décharger l'objet depuis le chariot lorsque le chariot est verrouillé sur le dispositif de levage.

14. Procédé pour appliquer le système selon l'une des revendications 1 à 12, comprenant les étapes suivantes :
a. la commande du véhicule guidé autonome (10) portant le chariot (50) avec l'objet pour qu'il se déplace jusqu'au dispositif de levage (30) ;
b. le déplacement de l'organe de saisie (40) jusqu'à une position verticale définie de manière telle que le mécanisme de verrouillage de chariot est retenu automatiquement par l'organe de saisie en commandant le véhicule guidé autonome pour qu'il conduise jusqu'à une position d'arrimage ;
c. la conduite du véhicule guidé autonome jusqu'à la position d'arrimage ; et
d. le déplacement de l'organe de saisie portant le mécanisme de verrouillage de chariot vers le haut jusqu'à ce que le moyen de couplage (43a, 43b) soit en prise avec le moyen de réception (62, 65) pour verrouiller le mécanisme de verrouillage de chariot sur le dispositif de levage, en particulier le chariot n'est pas déplacé verticalement avec le mécanisme de verrouillage de chariot.

15. Procédé selon la revendication 14, dans lequel le procédé comprend en outre les étapes suivantes :
a. la conduite du véhicule guidé autonome (10) jusqu'à la position d'arrimage ; et
b. le déplacement de l'organe de saisie (40) portant le mécanisme de verrouillage de chariot vers le bas jusqu'à ce que les éléments de couplage (20a, 20b) soient en prise avec les éléments de réception (63, 64) pour verrouiller le mécanisme de verrouillage de chariot sur le véhicule guidé autonome.
